(19) Europäisches Patentamt / European Patent Office / Office européen des brevets

(11) **EP 2 539 606 B1**

(12) **EUROPÄISCHE PATENTSCHRIFT**

(45) Veröffentlichungstag und Bekanntmachung des Hinweises auf die Patenterteilung:
**27.01.2016 Patentblatt 2016/04**

(21) Anmeldenummer: **11702968.6**

(22) Anmeldetag: **01.02.2011**

(51) Int Cl.:
**F16F 15/26** (2006.01)

(86) Internationale Anmeldenummer:
**PCT/EP2011/051385**

(87) Internationale Veröffentlichungsnummer:
**WO 2011/104069 (01.09.2011 Gazette 2011/35)**

(54) **MASSENAUSGLEICHSVORRICHTUNG EINER BRENNKRAFTMASCHINE**

MASS BALANCING DEVICE FOR AN INTERNAL COMBUSTION ENGINE

DISPOSITIF D'ÉQUILIBRAGE DE MASSES D'UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.02.2010 DE 102010009397**

(43) Veröffentlichungstag der Anmeldung:
**02.01.2013 Patentblatt 2013/01**

(73) Patentinhaber: **Schaeffler Technologies AG & Co. KG**
**91074 Herzogenaurach (DE)**

(72) Erfinder:
• **SOLFRANK, Peter**
**96158 Frensdorf (DE)**
• **BOGNER, Michael**
**90542 Eckental (DE)**

(56) Entgegenhaltungen:
**DE-A1-102004 033 927 JP-A- 58 225 242**
**JP-A- 58 225 243 JP-A- 60 109 636**
**JP-A- 60 109 639**

**Beschreibung**

**Gebiet der Erfindung**

Die Erfindung betrifft eine Massenausgleichsvorrichtung zum Ausgleich von freien Massenkräften und/oder freien Massenmomenten einer Hubkolben-Brennkraftmaschine. Die Massenausgleichsvorrichtung umfasst zwei mit gleicher Drehzahl und umgekehrter Drehrichtung rotierende Ausgleichswellen mit Unwuchten, deren Kraftkomponenten sich in Kolbenhubrichtung verstärken und orthogonal zur Kolbenhubrichtung aufheben, und ein zwischen der Kurbelwelle der Brennkraftmaschine und den Ausgleichswellen angeordnetes Übersetzungsgetriebe, das die Ausgleichswellen mit einem über dem Kurbelwellenwinkel ungleichförmigen Übersetzungsverhältnis von Kurbelwellendrehzahl zu Ausgleichswellendrehzahl derart antreibt, dass die Winkelgeschwindigkeit der Ausgleichswellen an den Kölbentotpunkten maximal ist.

**Hintergrund der Erfindung**

Eine Massenausgleichsvorrichtung der eingangs genannten Art ist aus der JP 60109639 A und der JP 60109636 A vorbekannt. Die dort offenbarten Übersetzungsgetriebe weisen zwei miteinander kämmende Getriebestirnräder auf, die zur Erzeugung des ungleichförmigen Übersetzungsverhältnisses mit elliptischen und zueinander identischen Wälzkreisen versehen sind und die, jeweils, auf den Ellipsenmittelpunkt bezogen, um exzentrische Achsen rotieren.

In der JP 58225242 A und JP 58225243 A sind Massenausgleichsvorrichtungen für Einzylinder-Brennkraftmaschinen offenbart, deren Übersetzungsgetriebe ebenfalls zwei identische, miteinander kämmende elliptische Getriebestirnräder aufweisen. Die Massenausgleichsvorrichtungen sind jedoch jeweils so konfiguriert, dass die Winkelgeschwindigkeit der Ausgleichswellen am oberen Kolbentotpunkt maximal und am unteren Kolbentotpunkt minimal ist.

Aus der DE 10 2004 033 927 A1 geht eine Massenausgleichsvorrichtung mit einem als Ketten- oder Zahnriementrieb ausgebildeten Übersetzungsgetriebe hervor. Dort ist es vorgeschlagen, das Antriebsrad der Kurbelwelle und/oder die Antriebsräder der Ausgleichswellen unrund auszubilden, um dem Trieb eine Ungleichförmigkeit aufzuprägen, welche die Rotationsschwankungen der Kurbelwelle kompensiert.

**Aufgabe der Erfindung**

Der vorliegenden Erfindung liegt die Aufgabe zugrunde, eine Massenausgleichsvorrichtung der eingangs genannten Art im Hinblick auf ein möglichst breites Spektrum von Brennkraftmaschinenanwendungen und gleichzeitig ein hohes Leichtbaupotenzial abzustimmen.

**Zusammenfassung der Erfindung**

Diese Aufgabe wird dadurch gelöst, dass die Massenausgleichsvorrichtung für eine Brennkraftmaschine lediglich in Mehrzylinderbauweise konfiguriert ist und der Mittelwert des Übersetzungsverhältnisses 1:2 beträgt. Da folglich die Ausgleichswellen mit doppelter Kurbelwellendrehzahl rotieren, ist mit anderen Worten eine Massenausgleichsvorrichtung zum Ausgleich der freien Massenkräfte und/oder -momente zweiter Ordnung einer Brennkraftmaschine der gebräuchlichsten Reihen- oder V-Bauarten vorgesehen. Das Leichtbaupotenzial der Massenausgleichsvorrichtung resultiert daraus, dass die ungleichförmige Winkelgeschwindigkeit der Ausgleichswellen in den Kolbentotpunkten (und auch alle 90° Kurbelwellenwinkel dazwischen) bezüglich der mittleren Winkelgeschwindigkeit maximal ist und dementsprechend die die Unwucht erzeugende Ausgleichswellenmasse reduziert werden kann.

Unabhängig von der Bauform des Übersetzungsgetriebes soll die Ungleichförmigkeit der Übersetzung auf unrunden Getrieberädern basieren, deren Unrundheit so mit der rotativen Position der Unwucht zu synchronisieren ist, dass die Winkelgeschwindigkeit der Ausgleichswellen dann maximal wird, wenn die Kraftkomponenten der Unwucht lediglich in Kolbenhubrichtung wirken, und dann minimal wird, wenn die Kraftkomponenten sich gegenseitig kompensieren, und insbesondere dann, wenn die Kraftkomponenten lediglich orthogonal zur Kolbenhubrichtung wirken und sich vollständig aufheben.

Diesbezüglich kann es zweckmäßig sein, wenn die Ausgleichswellen zwecks Drehrichtungsumkehr mit miteinander kämmenden Wellenstirnrädern versehen sind und das eine der Ausgleichswellen antreibende Übersetzungsgetriebe als Stirnradgetriebe mit zwei Getriebestirnrädern ausgebildet ist, deren Wälzkreise von der Kreisform abweichend ausgebildet sind und bezüglich der Kreisform abwechselnd vorstehende und zurückstehende Abschnitte aufweisen, die jeweils paarweise zu den Rotationsachsen der Getriebestirnräder symmetrisch beabstandet verlaufen. Anders als im eingangs zitierten Stand der Technik rotieren also die Getriebestirnräder nicht um exzentrische Achsen sondern um ihre Symmetrieachsen, wobei die vorstehenden und zurückstehenden Abschnitte so geformt und relativ zueinander positioniert sein müssen, dass die Getriebestirnräder in permanentem Eingriff miteinander stehen.

Als alternatives Übersetzungsgetriebe kann auch ein Zugmitteltrieb mit einem Zahnriemen oder einer Kette als Zugmittel vorgesehen sein, welcher bezüglich des Layouts (räumliche Anordnung von Kurbelwelle und Ausgleichswellen) beispielsweise in der eingangs genannten DE 10 2004 033 927 A1 offenbart ist. In diesem Fall ist das Triebrad seitens der Kurbelwelle und/oder die Triebräder seitens der Ausgleichswellen mit Unrundheiten auszuführen, die zu der beabsichtigten Ungleichförmigkeit in der Übersetzung führen.

Vorzugsweise soll der Wälzkreis des seitens der Ausgleichswellen verlaufenden Getriebestirnrads genau zwei vorstehende Abschnitte und zwei zurückstehende Abschnitte aufweisen, und der Wälzkreis des seitens der Kurbelwelle verlaufenden Getriebestirnrads soll genau vier vorstehende Abschnitte und vier zurückstehende Abschnitte aufweisen. Die Winkelgeschwindigkeit der Ausgleichswellen ist dann maximal, wenn ein vorstehender Abschnitt des kurbelwellenseitigen Getriebestirnrads und ein zurückstehender Abschnitt des ausgleichswellenseitigen Getriebestirnrads in Eingriff sind. Entsprechend ist die Winkelgeschwindigkeit der Ausgleichswellen dann minimal, wenn ein zurückstehender Abschnitt des kurbelwellenseitigen Getriebestirnrads und ein vorstehender Abschnitt des ausgleichswellenseitigen Getriebestirnrads in Eingriff sind.

Für die Dimensionierung der Unwuchten in Bezug auf die ungleichförmige Winkelgeschwindigkeit der Ausgleichswellen soll außerdem die folgende Beziehung gelten:

$$\frac{m \cdot r}{m' \cdot r'} = \frac{\omega^2}{\omega_{max}{}^2}$$

Dabei bezeichnen:

$m \cdot r =$ die Unwuchten der Ausgleichswellen
$\omega =$ mittlere Winkelgeschwindigkeit der Ausgleichswellen
$\omega_{max}$ maxiale Winkelgeschwindigkeit der Ausgleichswellen
$m' \cdot r' =$ Unwuchten von Ausgleichswellen, die mit der mittleren Winkelgeschwindigkeit rotieren und in den Kolbentotpunkten dieselben Kraftkomponenten wie die mit maximaler Winkelgeschwindigkeit rotierenden Ausgleichswellen erzeugen würden.

Das Verhältnis von maximaler zu mittlerer Winkelgeschwindigkeit der Ausgleichswellen beträgt vorteilhaft maximal 1,3, da bei einem den Wert 1,3 übersteigenden Verhältnis Drehschwingungsanregungen höherer Ordnungen zu groß werden würden. Das Verhältnis liegt besonders vorteilhaft in einem Bereich zwischen 1,1 und 1,2. Bei einem Verhältnis von 1,2 ist dann der Wert des Quotienten $(m \cdot r) / (m' \cdot r')$ etwa 0,7. Das bedeutet, dass die Unwucht und bei unverändertem Unwuchtradius die Unwuchtmasse jeder Ausgleichswelle um etwa 30% reduziert werden kann. Basis ist eine Massenausgleichsvorrichtung mit gleichförmig rotierenden Ausgleichswellen.

In einer hierzu alternativen Ausgestaltung kann es aber auch vorgesehen sein, dass bei maximaler Winkelgeschwindigkeit der Ausgleichswellen die freien Massenkräfte der Brennkraftmaschine überkompensiert werden, um die mittlere Abweichung vom idealen Ausgleich der Massenkräfte zweiter und höherer Ordnungen zu minimieren.

**Kurze Beschreibung der Zeichnungen**

Weitere Merkmale der Erfindung ergeben sich aus der nachfolgenden Beschreibung und aus den Zeichnungen. Es zeigen:

Figur 1    das Getriebeschema eines Ausführungsbeispiels einer erfindungsgemäßen Massenausgleichsvorrichtung;

Figur 2    ein Diagramm, das die Winkelgeschwindigkeit der Ausgleichswellen und die zugehörigen Kräfte über dem Kurbelwellenwinkel zeigt, und

Figur 3    das Getriebeschema einer an sich bekannten Massenausgleichsvorrichtung.

**Ausführliche Beschreibung der Zeichnungen**

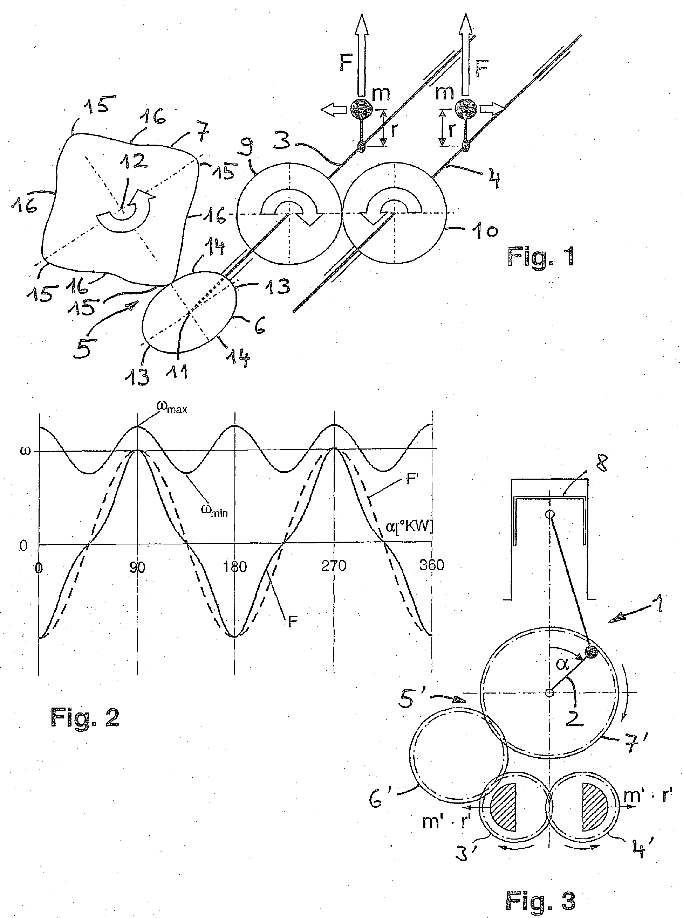

Das in Figur 1 offenbarte Ausführungsbeispiel der Erfindung sei ausgehend von Figur 3 erläutert, in der ein bevorzugter Anwendungsfall der Erfindung anhand eines Getriebeschemas dargestellt ist. Es handelt sich um den an sich bekannten Massenausgleich einer Hubkolben-Brennkraftmaschine 1 in 4-Zylinder-Reihenbauweise, die zum Ausgleich der freien Massenkräfte zweiter Ordnung zwei mit doppelter Drehzahl der Kurbelwelle 2 gegenläufig rotierende Ausgleichswellen 3' und 4' aufweist. Der Antrieb der Ausgleichswellen 3', 4' erfolgt über ein Übersetzungsgetriebe 5' in Form eines Stirnradgetriebes mit Getriebestirnrädern 6' und 7', welches zwischen der Kurbelwelle 2 und den Ausgleichswellen 3', 4' angeordnet ist und die Rotation der Kurbelwelle 2 mit dem Übersetzungsverhältnis 1:2 gleichförmig auf die Ausgleichswellen 3', 4' überträgt, die folglich mit doppelter Kurbelwellendrehzahl rotieren.

Die Kraftkomponenten der mit $m' \cdot r'$ bezeichneten Unwuchten der Ausgleichswellen 3', 4' heben sich orthogonal zur Kolbenhubrichtung auf und verstärken, d.h. verdoppeln sich in Kolbenhubrichtung. Dargestellt ist der Kurbelwellen-winkel $\alpha=45°$ nach OT, d.h. die Kurbelwelle 2 befindet sich in 45°-Stellung nach dem oberen Kolbentotpunkt der Zylinder Nr. 1 und Nr. 4. In dieser Stellung heben sich die quer zur Kolbenhubrichtung und voneinander weg gerichteten Unwuchten $m' \cdot r'$ vollständig auf. Beim Kurbelwellenwinkel $\alpha=0°$, d.h. die Kolben 8 der Zylinder Nr. 1 und Nr. 4 befinden sich genau im OT, sind beide Unwuchten $m' \cdot r'$ in Kolbenhubrichtung nach unten gerichtet, so dass deren gesamte Kraftwirkung verdoppelt ist. Dies gilt ebenso für den Kurbelwellenwinkel $\alpha=180°$ nach OT, bei dem sich die Kolben 8 der Zylinder Nr. 1 und Nr. 4 im UT, d.h. dem unteren Kolbentotpunkt befinden. Eine nach oben gerichtete verdoppelte Kraftwirkung erfolgt analog zu den Kurbelwellenwinkeln $\alpha=90°$ und $\alpha=270°$. Diese Kraftverläufe gehen auch aus dem Diagramm gemäß Figur 2 hervor, in welchem die gestrichelte Linie F' die Kräftwirkung der mit der konstanten Winkelgeschwiridigkeit $\omega$ rotierenden Ausgleichswellen 3', 4' zeigt.

Bei der erfindungsgemäßen Massenausgleichsvorrichtung in Figur 1 sind die Ausgleichswellen 3, 4 zwecks Drehrichtungsumkehr ebenfalls mit miteinander kämmenden Wellenstirnrädern 9 und 10 versehen. Ebenfalls ist ein die Ausgleichswellen 3, 4 antreibendes Übersetzungsgetriebe 5 in Form eines Stirnradgetriebes vorgesehen, dessen Getriebestirnräder 6 und 7 allerdings von der Kreisform abweichende Wälzkreise aufweisen, um die Ausgleichswellen 3, 4 mit einem über dem Kurbelwellenwinkel $\alpha$ ungleichförmigen Übersetzungsverhältnis von Kurbelwellendrehzahl zu Ausgleichswellendrehzahl anzutreiben. Zu diesem Zweck weisen die Wälzkreise der Getriebestirnräder 6, 7 bezüglich der Kreisform abwechselnd vorstehende und zurückstehende Abschnitte auf, die jeweils paarweise zu den Rotationsachsen 11 und 12 der Getriebestirnräder 6 bzw. 7 symmetrisch beabstandet verlaufen. Der Wälzkreis des seitens der Ausgleichswellen 3, 4 verlaufenden Getriebestirnrads 6 weist genau zwei vorstehende Abschnitte 13 und zwei zurückstehende Abschnitte 14 auf, während das seitens der Kurbelwelle 2 (siehe Figur 3) verlaufende Getriebestirnrad 7 genau vier vorstehende Abschnitte 15 und vier zurückstehende Abschnitte 16 aufweist.

Während der Mittelwert des Übersetzungsverhältnisses des Übersetzungsgetriebes 5 1:2 beträgt, d.h. die mittlere Drehzahl der Ausgleichswellen 3, 4 ist wie bei der bekannten Massenausgleichsvorrichtung gemäß Figur 3 doppelt so hoch wie diejenige der Kurbelwelle 2, ist die Form der Wälzkreise der Getriebestirnräder 6 und 7 derart, dass die maximale Winkelgeschwindigkeit $\omega_{max}$ der Ausgleichswellen 3, 4 etwa 20% größer und die minimale Winkelge-schwindigkeit $\omega_{min}$ der Ausgleichswellen 3, 4 etwa 20% kleiner als deren mittlere Winkelgeschwindigkeit $\omega$ ist. Die Winkelgeschwindigkeit ist dann maximal, wenn sich die Kraftwirkung der jeweils mit $m \cdot r$ bezeichneten Unwuchten verdoppelt. Wie aus Figur 2 an der Kraftwirkung F ersichtlich, erfolgt dies bei den vier Kurbelwellenwinkeln $\alpha=0°$ (OT der Zylinder Nr. 1 und Nr.4; UT der Zylinder Nr. 2 und Nr.3), $\alpha=90°$, $\alpha=180°$ (UT der Zylinder Nr. 1 und Nr.4; OT der Zylinder Nr. 2 und Nr.3) und $\alpha=270°$. Entsprechend ist die Winkelgeschwindigkeit dann minimal, wenn sich die Kraft-wirkung der Unwuchten $m \cdot r$ vollständig aufhebt. Dies erfolgt bei den vier jeweils dazwischen liegenden Kurbelwellen-winkeln $\alpha=45°$, $\alpha=135°$, $\alpha=225°$ und $\alpha=315°$.

Das Verhältnis der maximalen Winkelgeschwindigkeit $\omega_{max}$ zur mittleren Winkelgeschwindigkeit $\omega$ bewirkt, dass die Unwuchten $m \cdot r$ der Ausgleichswellen 3, 4 vergleichsweise klein dimensioniert werden und dennoch die freien Massenkräfte zweiter Ordnung vollständig kompensieren können, wenn diese maximal sind. Vergleichsbasis ist die Massenausgleichsvorrichtung gemäß Figur 3, deren Ausgleichswellen 3', 4' mit den Unwuchten $m' \cdot r'$ gleichförmig mit der mittleren Winkelgeschwindigkeit $\omega$ rotieren. Denn bei gleicher Kraftwirkung gilt folgender Zusammenhang:

$$F = m \cdot r \cdot \omega_{max}^{2} = F' = m' \cdot r' \cdot \omega^{2}$$

und somit:

$$\frac{m \cdot r}{m' \cdot r'} = \frac{\omega^{2}}{\omega_{max}^{2}}$$

Wenn also $\omega_{max} / \omega = 1{,}2$ ist, dann beträgt das Verhältnis $(m \cdot r) : (m' \cdot r')$ etwa 0,7. Mit anderen Worten kann also die Unwucht $m \cdot r$ der ungleichförmig rotierenden Ausgleichswellen 3, 4 um etwa 30% kleiner dimensioniert werden. Falls der Unwuchtradius r unverändert bleibt, gilt dies unmittelbar für die Unwuchtmasse m.

**Liste der Bezugszahlen**

1 Brennkraftmaschine
2 Kurbelwelle
3 Ausgleichswelle
4 Ausgleichswelle
5 Übersetzungsgetriebe
6 Getriebestirnrad
7 Getriebestirnrad
8 Kolben
9 Wellenstirnrad
10 Wellenstirnrad
11 Rotationsachse
12 Rotationsachse
13 vorstehender Bereich
14 zurückstehender Bereich
15 vorstehender Bereich
16 zurückstehender Bereich

**Patentansprüche**

1. Massenausgleichsvorrichtung zum Ausgleich von freien Massenkräften und/oder freien Massenmomenten einer Hubkolben-Brennkraftmaschine (1), umfassend zwei mit gleicher Drehzahl und umgekehrter Drehrichtung rotierende Ausgleichswellen (3, 4) mit Unwuchten, deren Kraftkomponenten sich in Kolbenhubrichtung verstärken und orthogonal zur Kolbenhubrichtung aufheben, und ein zwischen der Kurbelwelle (2) der Brennkraftmaschine (1) und den Ausgleichswellen (3, 4) angeordnetes Übersetzungsgetriebe (5), das die Ausgleichswellen (3, 4) mit einem über dem Kurbelwellenwinkel ungleichförmigen Übersetzungsverhältnis von Kurbelwellendrehzahl zu Ausgleichswellendrehzahl derart antreibt, dass die Winkelgeschwindigkeit der Ausgleichswellen (3, 4) an den Kolbentotpunkten maximal ist, **dadurch gekennzeichnet, dass** die Massenausgleichsvorrichtung für eine Brennkraftmaschine (1) lediglich in Mehrzylinderbauweise konfiguriert ist und der Mittelwert des Übersetzungsverhältnisses 1:2 beträgt.

2. Massenausgleichsvorrichtung nach Anspruch 1, **dadurch gekennzeichnet, dass** die Ausgleichswellen (3, 4) zwecks Drehrichtungsumkehr mit miteinander kämmenden Wellenstirnrädern (9, 10) versehen sind und das eine der Ausgleichswellen (3, 4) antreibende Übersetzungsgetriebe (5) als Stirnradgetriebe mit zwei Getriebestirnrädern (6, 7) ausgebildet ist, deren Wälzkreise von der Kreisform abweichend ausgebildet sind und bezüglich der Kreisform abwechselnd vorstehende Abschnitte (13, 15) und zurückstehende Abschnitte (14, 16) aufweisen, die jeweils paarweise zu den Rotationsachsen (11, 12) der Getriebestirnräder (6, 7) symmetrisch beabstandet verlaufen.

3. Massenausgleichsvorrichtung nach Anspruch 2, **dadurch gekennzeichnet, dass** der Wälzkreis des seitens der Ausgleichswellen (3, 4) verlaufenden Getriebestirnrads (6) genau zwei vorstehende Abschnitte (13) und zwei zurückstehende Abschnitte (14) und dass der Wälzkreis des seitens der Kurbelwelle (2) verlaufenden Getriebestirnrads (7) genau vier vorstehende Abschnitte (15) und vier zurückstehende Abschnitte (16) aufweist.

4. Massenausgleichsvorrichtung nach Anspruch 1, **gekennzeichnet durch** die Beziehung

$$\frac{m \cdot r}{m' \cdot r'} = \frac{\omega^2}{\omega_{max}^2}$$

mit den Bezeichnungen:

$m \cdot r$ = die Unwuchten der Ausgleichswellen (3, 4)
$\omega$ = mittlere Winkelgeschwindigkeit der Ausgleichswellen (3, 4)
$\omega_{max}$ = maximale Winkelgeschwindigkeit der Ausgleichswellen (3, 4)

m' · r' =Unwuchten von Ausgleichswellen (3', 4'), die mit der mittleren Winkelgeschwindigkeit rotieren und in den Kolbentotpunkten dieselben Kraftkomponenten wie die mit maximaler Winkelgeschwindigkeit rotierenden Ausgleichswellen (3, 4) erzeugen würden.

**5.** Massenausgleichsvorrichtung nach Anspruch 4, **gekennzeichnet durch** das Verhältnis $\omega_{max} / \omega \leq 1{,}3$.

**6.** Massenausgleichsvorrichtung nach Anspruch 5, **gekennzeichnet durch** das Verhältnis $1{,}1 \leq \omega_{max} / \omega \leq 1{,}2$.

## Claims

**1.** Mass balancing apparatus for balancing free mass forces and/or free mass moments of a reciprocating-piston internal combustion engine (1), comprising two balancing shafts (3, 4) which rotate at an identical rotational speed and in an opposite rotational direction and have unbalances, the force components of which amplify one another in the piston stroke direction and cancel one another out orthogonally with respect to the piston stroke direction, and a step-up gear mechanism (5) which is arranged between the crankshaft (2) of the internal combustion engine (1) and the balancing shafts (3, 4) and drives the balancing shafts (3, 4) with a transmission ratio of crankshaft rotational speed to balancing shaft rotational speed which is unequal over the crankshaft angle, in such a way that the angular velocity of the balancing shafts (3, 4) is at a maximum at the piston dead centres, **characterized in that** the mass balancing apparatus is configured for an internal combustion engine (1) merely of multiple-cylinder design and the mean value of the transmission ratio is 1:2.

**2.** Mass balancing apparatus according to Claim 1, **characterized in that**, for the purpose of reversing the rotational direction, the balancing shafts (3, 4) are provided with shaft spur gears (9, 10) which mesh with one another, and the step-up gear mechanism (5) which drives one of the balancing shafts (3, 4) is configured as a spur gear mechanism with two gear-mechanism spur gears (6, 7), the rolling circles of which are configured so as to deviate from the circular shape and have alternatingly projecting sections (13, 15) and set-back sections (14, 16) with regard to the circular shape which in each case run in pairs such that they are spaced apart symmetrically with respect to the rotational axes (11, 12) of the gear-mechanism spur gears (6, 7).

**3.** Mass balancing apparatus according to Claim 2, **characterized in that** the rolling circle of the gear-mechanism spur gear (6) which runs on the side of the balancing shafts (3, 4) has precisely two projecting sections (13) and two set-back sections (14), and **in that** the rolling circle of the gear-mechanism spur gear (7) which runs on the side of the crankshaft (2) has precisely four projecting sections (15) and four set-back sections (16).

**4.** Mass balancing apparatus according to Claim 1, **characterized by** the relationship
with the following designations:

    m•r = the unbalances of the balancing shafts (3, 4)
    $\omega$ = mean angular velocity of the balancing shafts (3, 4)
    $\omega_{max}$ = maximum angular velocity of the balancing shafts (3, 4)
    m'•r' = unbalances of balancing shafts (3', 4') which rotate at the mean angular velocity and would generate the same force components at the piston dead centres as the balancing shafts (3, 4) which rotate at maximum angular velocity.

**5.** Mass balancing apparatus according to Claim 4, **characterized by** the ratio $\omega_{max} / \omega \leq 1.3$.

**6.** Mass balancing apparatus according to Claim 5, **characterized by** the ratio $1.1 \leq \omega_{max} / \omega \leq 1.2$.

## Revendications

**1.** Dispositif d'équilibrage de masses pour l'équilibrage de forces inertielles libres et/ou de moments d'inertie libres d'un moteur à combustion interne à pistons alternatifs (1), comprenant deux arbres d'équilibrage (3, 4) tournant à la même vitesse de rotation et dans des sens opposés, avec des balourds dont les composantes de force s'additionnent dans la direction de la course des pistons et s'annulent en direction orthogonale à la direction de la course des pistons, et un engrenage de transmission (5) agencé entre le vilebrequin (2) du moteur à combustion interne (1) et les arbres d'équilibrage (3, 4), qui entraîne les arbres d'équilibrage (3, 4) avec un rapport de transmission de la vitesse de rotation du vilebrequin à la vitesse de rotation des arbres d'équilibrage non uniforme sur l'angle du vilebrequin, de telle manière que la vitesse angulaire des arbres d'équilibrage (3, 4) soit maximale aux points morts du piston, **caractérisé en ce que** le dispositif d'équilibrage de masses est configuré pour un moteur à combustion interne (1) uniquement du type à plusieurs cylindres et que la valeur moyenne du rapport de transmission vaut 1:2.

**2.** Dispositif d'équilibrage de masses selon la revendication 1, **caractérisé en ce que** les arbres d'équilibrage (3, 4) sont munis de roues dentées cylindriques (9, 10) engrenant l'une avec l'autre pour l'inversion du sens de rotation et l'engrenage de transmission (5) entraînant un des arbres d'équilibrage (3, 4) est réalisé sous forme d'engrenage à roues dentées cylindriques avec deux roues dentées cylindriques de transmission (6, 7), dont les cercles de roulement s'écartent de la forme circulaire et présentent, par rapport à la forme circulaire, en alternance des parties saillantes (13, 15) et des parties rentrantes (14, 16), qui sont espacées par paires de façon symétrique par rapport aux axes de rotation (11, 12) des roues dentées cylindriques de transmission (6, 7).

**3.** Dispositif d'équilibrage de masses selon la revendication 2, **caractérisé en ce que** le cercle de roulement de la roue dentée cylindrique de transmission (6) située du côté des arbres d'équilibrage (3, 4) présente exactement deux parties saillantes (13) et deux parties rentrantes (14) et **en ce que** le cercle de roulement de la roue dentée cylindrique (7) du côté du vilebrequin (2) présente exactement quatre parties saillantes (15) et quatre parties rentrantes (16).

**4.** Dispositif d'équilibrage de masses selon la revendication 1, **caractérisé par** la relation

$$\frac{m \cdot r}{m' \cdot r'} = \frac{\omega^2}{\omega_{max}^2}$$

avec les significations suivantes:

m·r = les balourds des arbres d'équilibrage (3, 4)
$\omega$ = vitesse angulaire moyenne des arbres d'équilibrage (3, 4)
$\omega_{max}$ = vitesse angulaire maximale des arbres d'équilibrage (3, 4)
m'·r'= balourds d'arbres d'équilibrage (3', 4'), qui tourneraient avec la vitesse angulaire moyenne et qui produiraient aux points morts des pistons les mêmes composantes de force que les arbres d'équilibrage (3, 4) tournant avec la vitesse angulaire maximale.

**5.** Dispositif d'équilibrage de masses selon la revendication 4, **caractérisé par** un rapport $\omega_{max}/\omega \leq 1{,}3$.

**6.** Dispositif d'équilibrage de masses selon la revendication 5, **caractérisé par** le rapport $1{,}1 \leq \omega_{max}/\omega \leq 1{,}2$.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 60109639 A
- JP 60109636 A
- JP 58225242 A
- JP 58225243 A
- DE 102004033927 A1